# EUROPEAN PATENT APPLICATION

(11) **EP 1 600 867 A1**
(43) Date of publication of application: **30.11.2005**
(21) Application number: 04076593.5
(22) Date of filing: 28.05.2004
(51) Int. Cl.: G06F 17/60

(54) **Order manager system**

(71) Applicant: Atos Origin Nederland B.V., 3528 BJ Utrecht (NL)
(72) Inventor: Kema, Hans, 9721 GP Groningen (NL); Kok, Gerard H.A., 2585 SX Den Haag (NL); Beetstra, Oebele H., 9491 BJ Zeijen (NL); Van der Kallen, Hein Willibord Albert, 2253 VR Voorschoten (NL); Wester, Johan Jacob, 9737 JC Groningen (NL); Wagenaar, Eduard Richard Harm, 9678 PE Wersterlee (NL); Van Gent, Pieter Paul, 9722 EE Groningen (NL); Michel, Paul Heiko, 9721 WT Groningen (NL)
(74) Representative: de Vries, Johannes Hendrik Fokke

(57) **Abstract**

An order management system (1) comprises an engine module (10) for processing order-related data, databases (11, 12, 13, 14) coupled to the engine module for storing and/or retrieving order-related data, and a product model module (20) coupled to the engine module (10) for applying a standard product model to the order-related data, irrespective of their source. The product model module (20) may be arranged for supplying rules according to which order-related data are organized. The product model module (20) may utilize a layered product model comprising product types, more specific standard products and still more specific products, and associated property types, more specific standard properties and still more specific properties respectively.

## Description

The present invention relates to an order manager system. More in particular, the present invention relates to a system for handling, controlling and processing orders, such as clients orders, for products and services.

Companies offering products and services typically have a front-end (or front office) for order placement and a back-end (or back office) for order fulfilment. The front-end provides customer interaction through sales channels such as the Internet, dedicated sales terminals, shops, and wholesalers, allowing customers or their intermediaries to place orders. The back-end may comprise various order fulfilment units, including warehouses, shipping departments, engineering departments, planning units, and typically also billing units. The order manager system accepts orders from the front-end and passes these orders on to the appropriate back-end unit. The processing of the orders may be carried out automatically, human interaction is typically kept to a minimum or eliminated altogether.

Such an order manager system faces the problem that the front-end systems and back-end systems it has to interface with typically utilize different data models having different requirements. In particular, these front-end and back-end systems may have very different designs, some being state-of-the-art and others being older and possibly out-dated. This so-called legacy problem, which may result in an incompatibility of systems and data formats greatly complicates the tasks of the order manager system.

It is an object of the present invention to overcome these and other problems of the Prior Art and to provide an order manager system that is capable of providing compatibility between various front-end and back-end systems, virtually irrespective of their design and age.

Accordingly, the present invention provides a system for managing orders, the system comprising:
- an engine module for processing order-related data,
- at least one database coupled to the engine module for storing and/or retrieving order-related data, and
- a product model module coupled to the engine module for applying a product model to the order-related data, irrespective of their source.
The engine module of the order manager system of the present invention processes all data related to the orders, retrieving data from the at least one database and storing data in said database, if appropriate. To provide compatibility with the front-end and the back-end systems, a standard product model is used. This product model and its associated rules are stored in the product model module. This product model module is coupled to the engine module to allow the engine module to exchange data with the product model module and, for example, to check whether order data match the product model. The product model, which establishes a standard within the order manager system, allows data from various sources to be processed appropriately and be delivered to their destinations. Thus, the legacy problem is solved by supplying a product model that is universal within the order management system.

In a preferred embodiment, the product model module is arranged for supplying rules according to which order-related data are organized. That is, the product module involves a set of rules which specify the data format of the standard product model referred to above. These rules are applied, for example, when updating the data bases.

Various product models may be used. Advantageous product models define products and their properties on at least two levels: a first, general level and a second, more specific level. In accordance with the present invention it is preferred that a product models using three levels is used: a first, general level; a second, more specific level; and a third, individual level. Accordingly, the product model module preferably utilizes a product model comprising (a) product types, (b) more specific standard products and (c) still more specific products, which are associated with (d) property types, (e) more specific standard properties and (f) still more specific properties respectively. Such a product model allows the products and their associated properties to be modelled in more detail. In particular, this product model allows a distinction to be made between an individual product and an abstraction of the individual product without resorting to the most general definition of the product. By using a more detailed product model, in particular a product model involving multiple levels, a better match can be made with the data originating from various sources while offering an improved flexibility of the order manager system.

In an advantageous embodiment, the system further comprises a data import module coupled to the databases for updating said databases. This data import module, which is preferably coupled between the databases and a suitable back-end unit, allows suitable data to be imported from a back-end unit. Accordingly, the databases may be kept up to date by repeatedly updates reflecting the number of items available, the work load, current prices, and other data.

Although the product model module may be coupled directly to the engine module, it is preferred that the product model module is coupled to the engine module via the data import module. This arrangement allows the data import module to invoke the product model when updating the databases, while minimizing the involvement of the engine module in the updating process. As a result, the workload of the engine module is reduced without any detrimental effects to the efficacy of the product model.

The system of the present invention may advantageously further comprise at least one front-end coupling module for coupling the engine module to front-end units. In typical embodiments, several front-end coupling modules may be present, each designed for a different set of front-end units.

Similarly, the system may advantageously comprises a transaction server module for coupling the engine module to back-end units. Such a transaction server module may carry out any data and/or protocol conversion required by the back-end systems. In addition, providing a transaction server module separate from the engine module reduces the workload of the engine module.

The system may further comprise a message generator unit coupled to the transaction server module for generating messages. Such messages may be sent to customers directly or via a front-end unit. The messages may be paper messages (letters) or electronic messages (e-mail, mobile telephone text messages). The messages may be initiated by the engine module, for example when an order has been successfully completed, or by the transaction server module upon receipt of an appropriate message from the back-end.

Many back-end units may be coupled to the engine module directly or through the transaction server module. Other back-end units, typically units having a low degree of automation, cannot be directly coupled to the engine module or the transaction server module. In case the back-end contains such units, the system may advantageously comprise order fulfilment modules coupled between the transaction server and some back-end units for facilitating the exchange of data between the transaction server and said back-end units. It will be understood that when the transaction server is not present, the order fulfilment module(s) may be directly coupled to the engine module.

The system of the present invention may further comprise a process control module coupled to the engine module for logging activities of the engine module. Such a process control module which logs activities is very useful for fault handling and error tracking as it provides a history of the engine module's activities.

The present invention further provides a computer program product for implementing the system defined above on a computer. Such a computer may be a general purpose computer, such as a so-called personal computer, or a server. The present invention additionally provides a computer system comprising a memory and a processor, which computer system is arranged for implementing the order manager system defined above.

The present invention will further be explained below with reference to exemplary embodiments illustrated in the accompanying drawings, in which:
Fig. 1 schematically shows a preferred embodiment of a system according to the present invention.
Fig. 2 schematically shows part of the system according of Fig. 1 in more detail.

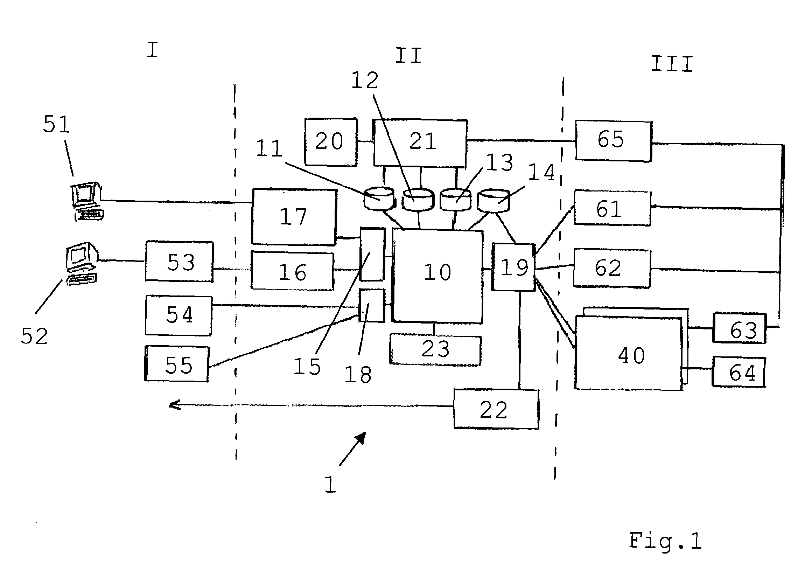

The order manager system 1 shown merely by way of non-limiting example in Fig. 1 comprises an engine module 10, databases 11, 12, 13 and 14, front-end coupling modules 15, 16, 17 and 18, a transaction server module 19, a product model module 20, a data import module 21, an (optional) message generator 22, and a process control module 23. The exemplary front-end depicted in Fig. 1 comprises Web (Internet) terminals 51 and 52, a dedicated web front-end unit 53, a presales unit 54, and a wholesale unit 55. The exemplary back-end comprises a billing system 61, an infrastructure unit 62, an inventory unit 63, a planning unit 64, and a match & merge unit 65. Order fulfilment modules 40 are arranged between the transaction server 19 on the one hand and the inventory system unit 63 and the planning unit 64 on the other hand.

In Fig. 1, the order system as a whole is shown to be divided into three domains: an order manager domain I which is essentially comprised of the order manager system 1, a front-end domain II and a back-end domain III. It is noted that the order fulfilment modules 40, although located in the back-end domain III, may be considered part of the order manager system 1. The three domains I, II and III together constitute an order system of which the order manager system 1 is a vital part.

The engine module 10 may be constituted by an engine, for example a workflow engine, known *per se.* Such engines, which are typically constituted by software programme packages, are commercially available. The engine module 10 receives order-related data from the front-end via the front-end coupling modules 15 and 18. These data are processed using the databases 11-14 and passed on to the transaction server module 19 which routes the processed order-related data to the appropriate back-end unit. The engine module 10 also generates feedback to the front-end in response to database queries or data received from the back-end.

In the embodiment of Fig. 1, there are four database units 11-14 that each contain a database or "dossier":
- database unit 11 contains the Product Dossier (PRDO) which holds all relevant product details, including product properties, models, suppliers, price components, etc.
- database unit 12 contains the Customer Dossier (CUDO) which holds information regarding the client: his/her service history, preferences, and/or credit rating.
- database unit 13 contains the Installed Base Dossier (IBDO) which holds the installed base, that is, the products in use.
- database unit 14 contains the Order Dossier (ORDO) which holds order progress information.
It will be understood that the particular databases used depend on the type of products and services that are commercialized using the system. A telephone or telecommunications company will keep an Installed Base Dossier holding information on the subscriber lines and subscriber equipment, and possibly also on the common infrastructure. An on-line bookshop does typically not require this information.

The engine module 10 queries the dossiers PRDO, CUDO, IBDO and ORDO of the databases 11-14 to obtain information regarding a current order. The engine module 10 may, for example, verify the address of the customer, the price of the product ordered, the availability of the product ordered and may provide the customer with an estimate of the delivery date. The database information is kept current by the data import module 21 that is coupled to the database units 11-13 and that, in turn, receives update information from the match & merge unit 65. The match & merge unit 65 is coupled to various back-end units and collects data from these units. It is noted that in the embodiment of Fig. 1 the data import module 21 is not coupled to the database unit 14 containing the Order Dossier, as this Order Dossier may only be updated by the engine module.

The data import module 21 is coupled to the product model module 20 which contains the product model that is used as a standard in the system. That is, all product-related data are matched with the product model so as to produce a "universal" set of product data within the system.

The product model has, in the preferred embodiment, three layers: a first layer defining a product type and its associated properties (type properties, a second layer defining a standard product and its associated properties (standard properties), and a third layer defining the individual product and its associated properties (individual properties). It has been found that this model provides a very practical product definition while also providing flexibility and a suitable basis for a product model that is universal within the order system.

The engine module 10 is connected to several front-end coupling modules for exchanging data with the front end: front-end controller module 15, dialogue manager module 16, web front-end module 17 and API (Application Program Interface) or retrieval module 18. The dialogue manager module 16 and the web front-end module 17 are coupled to the engine module 10 through the front-end controller module 15. The web front-end module 17 is coupled (via the Internet) to Internet terminal 51, while the dialogue manager module 16 is coupled, via a web sales front-end unit 53, to sales point terminal 52. The API (Application Program Interface) module 18 provides the interface between the engine module 10 and both a pre-sales system 54 and a wholesale system 55. It will be understood that the terminals 51 and 52, and the units 53, 54 and 55 are part of the front-end (front office), and that the order management system modules 15, 16, 17 and 18 provide an interface between the engine module 10 and these front-end units.

The front-end controller module 15 translates any queries from the engine module 10 into customer dialogues. In addition, the front-end controller processes the answers to questions (so-called pre-filled questions) that are sent directly by a distribution channel of the back-end. The front-end controller 15 further controls the dialogue manager module 16 and the web front-end module 17. The dialogue manager module 16 allows front-end units to customise the appearance or "look and feel" of the system. To enhance its flexibility, the dialogue manager module 16 uses XML (Extended Markup Language), in contrast to typical Internet applications that use the more rigid HTML (HyperText Markup Language).

In the embodiment shown, the web front-end module 17 supports the following functions:
- placing orders, both via a linear dialogue and via a "shopping cart",
- viewing orders,
- viewing the customer's installed base,
- showing personal offers,
- ordering on the basis of personal offers,
- processing pre-filled questions.
This module therefore provides customers with to opportunity to place any orders themselves, thus eliminating the need for any interaction by sales persons.

As mentioned above, the dialogue manager module 16 facilitates the interaction between the front-end controller module 15 and the web sales unit 53. To this end, the dialogue manager module 16 presents order forms to the operator of the sales terminal 52. These order forms contain questions regarding the desired product or service, the customer placing the order, his/her address and credit data, and other information relevant to the ordering process. The dialogue manager module 16 performs error checking on these forms and returns the forms to the customer at the terminal 52 if any errors are detected.

According to an advantageous further aspect of the present invention, the error checking and correction is carried out for each question (or cluster of questions) answered. That is, the dialogue manager module 16 is arranged in such a way that a check is carried out after each question (or cluster of questions) that has been answered, and the question (or cluster of questions) is repeated substantially immediately when an error is detected. This reduces the amount of data that has to be exchanged between the dialogue manager module 16 and the terminal 52, in particular when compared with Prior Art systems in which error checking is carried out per form and where the entire form has to be re-sent if an error is detected.

The dialogue manager module 16 is very flexible in that it allows the web sales front end unit(s) 53 to determine the "look and feel" of the ordering sales system: the web sales unit(s) may use the information provided by the dialogue manager module in a visual (and/or oral) format of their choosing. That is, the way in which the information (including questions) originating from the dialogue manager module is presented by the web front-end unit 53 and its associated terminal 52 is almost entirely determined by the web front-end unit 53.

As mentioned above, the API (Application Program Interface) retrieval module18 couples the presales system unit 54 and the wholesale unit 55 to the engine module 10. The API module 18 supports retrieval services: sales channels may retrieve information (for example client data, product data) from the order manager system using this API module. In addition, the API module 18 allows sales channels, such as the units 54 and 55, to place and cancel orders, thus providing direct automated access to the system.

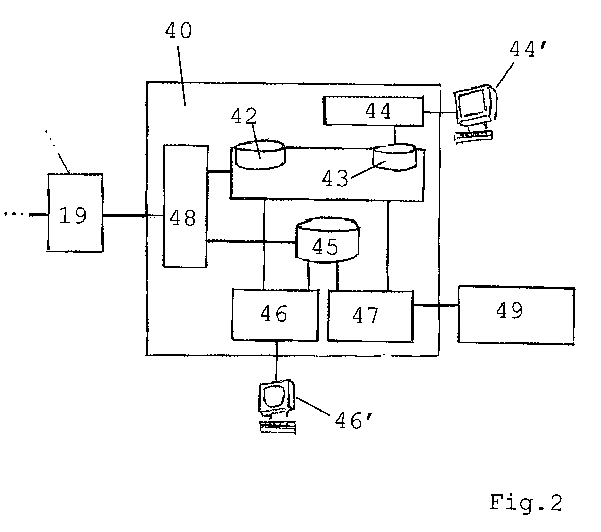

The transaction server module 19 provides an interface between the engine module 10 and the back-end (back office) which comprises, in the present example, a billing unit 61, an infrastructure unit 62, an inventory unit 63 and a planning unit 64. Order fulfilment modules 40 facilitate the interaction with the inventory unit 63 and the planning unit 64. The operation of the order fulfilment modules 40 will later be explained in more detail with reference to Fig. 2.

It is noted that in the preferred embodiment described above, all communications between the system modules, and also between system modules and front-end and back-end units takes place in accordance with the XML (Extensible Markup Language) which is known *per se*. It has been found that using this format results in a highly efficient data exchange as XML can be used to store any kind of structured information and to enclose or encapsulate information in order to pass it between different computing systems which would otherwise be unable to communicate.

It is further noted that the order manager system of the present invention acts as a "catalyser": the system facilitates the service process and improves the quality of the ordering process, resulting in reduced costs and a higher consumer satisfaction. The order manager system connects the front-end (front office) and the back-end (back office) and offers a generic platform, independent of existing processes and systems, where all relevant data with respect to the customer base, the product and services portfolio and order fulfilment is available for each customer contact.

The order manager system provides decoupling points or interfaces separating the front office (front-end) from the back office (back-end) and any infrastructure associated with the back office. At these decoupling points, the order manager system offers data translation to facilitate the exchange of data between the front office and the back office. As a result, the order manager system of the present invention has the capability of combining different types of orders. In addition, the system provides the opportunity to gradually replace legacy systems in a controlled manner. Products and services are translated into a formalized model that prompts product group standardization.

The order manager system of the present invention may coexist alongside existing legacy systems, allowing regular data exchanges with these legacy systems without requiring a more permanent integration on a real time basis. This provides the opportunity to gradually migrate the functionality of the interfaced legacy systems onto the platform of the order manager system and, in the long term, core system migration and replacement.

The order manager system uniformly handles customer interaction, irrespective of the contact channel used by the customer. Channel-specific issues such as scripting in a call centre, the funnel sequence in a sales application of cookie management in an Internet environment are handled by the respective standard applications used in each case. The system transforms an order placed by a customer into sub-orders (partial orders) for those back-end units which are involved in the order fulfilment. These sub-orders contain only the data relevant to the particular back-end unit.

The exemplary order fulfilment module 40 schematically illustrated in Fig. 2 comprises a workflow engine module 41, a process model database 42, a process data database 43, an on-line monitor module 44, a production orders database 45, an interaction service module 46, a transaction services module 47, and a communication service module 48. According to an advantageous further feature of the present invention, the workflow engine module 41 may be constituted by a commercially available software module, whereas the remainder of the modules are custom-made. This allows order fulfilment module 40 to be tailored to the requirements of the order management system without being hampered by any limitations of commercially available modules. By using a commercially available workflow engine module 41 and surrounding it with custom-made modules, the advantageous properties of the standard workflow engine module are fully exploited. It will be understood that one or more of the other modules may also be constituted by commercially available modules.

Communication with the transaction server module 19 is achieved via the communication service module 48, which hides any undesirable features of the order fulfilment module 40 from the remainder of the order manager system. Production orders are received and stored in the production orders database 45. The workflow engine module 41 accesses the orders via the transaction services module 47, which allows fully automatic access, or via the interaction services module 46, which allows manual access and control via associated terminals 46'. The transaction services module 47 exchanges data with various inventory and planning units 49 which are typically external to the order fulfilment module 40.

The workflow engine module 41 utilizes a process model stored in the process model database 42, and process data stored in the process data database 43. An on-line monitoring module 44 allows an operator to monitor the order processing using an associated terminal 44'.

As discussed above, the order fulfilment module 40, of which a plurality may be present in the system, serve to facilitate the order fulfilment process for selected back-end units, typically back-end units which have their own facilities for automated order fulfilment support.

The orders processed by the order manager system of the present invention may relate to any suitable products and/or services. The system of the present invention is particularly suitable for telephone or telecommunications companies, but is also suitable for other types of businesses, for example travel agencies, book stores, utility companies, etc.

The modules mentioned above may be constituted by software, hardware or a combination of software and hardware. The software modules may run on a general purpose computer or on a dedicated computer, such as a server.

It will be understood by those skilled in the art that the present invention is not limited to the embodiments illustrated above and that many modifications and additions may be made without departing from the scope of the invention as defined in the appending claims.

## Claims

1. A system (1) for managing orders, the system comprising:
• an engine module (10) for processing order-related data,
• at least one database (11, 12, 13, 14) coupled to the engine module for storing and/or retrieving order-related data, and
• a product model module (20) coupled to the engine module (10) for applying a standard product model to the order-related data, irrespective of their source.

2. The system according to claim 1, wherein the product model module (20) is arranged for supplying rules according to which order-related data are organized.

3. The system according to claim 1, wherein the product model module (20) utilizes a product model comprising product types, more specific standard products and still more specific products, and associated property types, more specific standard properties and still more specific properties respectively.

4. The system according to any of the preceding claims, further comprising a data import module (21) coupled to the databases (11, 12, 13, 14) for updating said databases.

5. The system according to claim 4, wherein the product model module (20) is coupled to the engine module (10) via the data import unit (21).

6. The system according to any of the preceding claims, further comprising at least one front-end coupling module (15, 16, 17, 18) for coupling the engine module (10) to front-end units (51, 52).

7. The system according to any of the preceding claims, further comprising a transaction server module (19) for coupling the engine module (10) to back-end units (61, 62, 63, 64).

8. The system according to any of the preceding claims, further comprising a message generator unit (22) coupled to the transaction server unit (19) for generating messages.

9. The system according to any of the preceding claims, further comprising order fulfilment modules (40) coupled between the transaction server (19) and some back-end units (63, 64) for facilitating the exchange of data between the transaction server (19) and said back-end units (63, 64).

10. The system according to any of the preceding claims, further comprising a process control module (23) coupled to the engine module (10) for logging activities of the engine module.

11. A computer program product for implementing the order manager system (1) according to any of the preceding claims on a computer.

12. A computer system comprising a memory and a processor, arranged for implementing the order manager system (1) according to any of claims 1 to 10.
